# EUROPÄISCHE PATENTSCHRIFT

(11) **EP 0 805 081 B1**
(45) Veröffentlichungstag und Bekanntmachung des Hinweises auf die Patenterteilung: **16.05.2001**
(21) Anmeldenummer: 97103918.5
(22) Anmeldetag: 08.03.1997
(51) Int. Cl.: B60T 7/20

(54) **Höhenverstellbare Zugeinrichtung für Fahrzeuganhänger**
Traction device,adjustable in height,for trailer
Dispositif de traction,réglable en hauteur,pour remorque

(30) Priorität: 29.04.1996 DE 19617062
(43) Veröffentlichungstag der Anmeldung: 05.11.1997
(73) Patentinhaber: BPW Bergische Achsen Kommanditgesellschaft, 51674 Wiehl (DE)
(72) Erfinder: Dowe, Günter, 51588 Nümbrecht (DE)
(74) Vertreter: Stenger, Watzke & Ring Patentanwälte

(56) Entgegenhaltungen:
- WO-A-88/02703
- DE-A- 3 120 571
- DE-B- 1 159 788
- PATENT ABSTRACTS OF JAPAN vol. 018, no. 589 (M-1701), 10. November 1994 & JP 06 219251 A (KUBOTA CORP), 9. August 1994

## Beschreibung

Die Erfindung betrifft eine höhenverstellbare Zugeinrichtung für Fahrzeuganhänger, mit einer fest mit einem Anhängerfahrzeugrahmen verbindbaren Zugdeichsel, von der ein Teil gegenüber der übrigen Zugdeichsel höhenverstellbar ist, mit einem in Fahrzeuglängsrichtung in dem höhenverstellbaren Teil der Zugdeichsel geführten und mit einer Kupplung für ein Zugfahrzeug verbundenen Zugstange, und mit einer Auflaufbremseinrichtung, die bei einer Relativbewegung zwischen der Zugstange und dem höhenverstellbaren Teil der Zugdeichsel über einen Umlenkhebel auf ein Bremsgestänge wirkt.

Derartige höhenverstellbare Zugeinrichtungen sind in verschiedenen Ausführungen bekannt, auch in Verbindung mit einer Auflaufbremseinrichtung. Bei einer Zugeinrichtung nach der DE 31 20 571 A1 wird die Bewegung der Zugstange während des Auflaufvorganges mittels einer flexiblen, in Gestalt eines Bogens geführten Übertragungseinrichtung auf die Bremsanlage des Anhängers übertragen. Die Übertragungseinrichtung setzt sich aus einer flexiblen Umhüllung sowie einer darin verschiebbar geführten Seele zusammen, die die Relativbewegung der Zugstange auf das Bremsgestänge des Anhängers überträgt. Bestandteil der so gebildeten Übertragungseinrichtung ist ferner ein Umlenkhebel, welcher außen an dem die Zugstange aufnehmenden Führungsrohr gelenkig angeordnet ist. Der Umlenkhebel bildet hierbei ein Übertragungsorgan zwischen der axial in dem Führungsrohr geführten Zugstange und der in der flexiblen Umhüllung geführten Seele.

Der Erfindung liegt die **Aufgabe** zugrunde, die bekannte Zugeinrichtung im
Hinblick auf eine Konstruktions- und Bedienungsvereinfachung weiterzuentwickeln.

Die **Lösung** dieser Aufgabenstellung ist dadurch gekennzeichnet, daß der Umlenkhebel an dem fest mit dem Anhängerfahrzeugrahmen verbindbaren Teil der Zugdeichsel angeordnet und über einen Bowdenzug mit der Zugstange verbunden ist.

Mit dieser erfindungsgemäßen Weiterbildung einer höhenverstellbaren Zugeinrichtung wird der Vorteil erreicht, daß das Gewicht des höhenverstellbaren Teiles der Zugdeichsel durch die Verlagerung des Umlenkhebels an den mit dem Fahrzeugrahmen verbundenen Teil der Zugdeichsel verringert wird, Des weiteren kann eine Vergrößerung der Bodenfreiheit gegenüber solchen Konstruktionen erzielt werden, bei denen die Bodenfreiheit durch den an dem höhenverstellbaren Teil der Zugdeichsel angeordneten Umlenkhebel eingeschränkt wird. Bei der erfindungsgemäßen Zugeinrichtung erfolgt die Übersetzung der Kraftübertragung der aus der Auflaufbremseinrichtung herrührenden Kräfte erst am Deichselrohr, so daß sich am höhenverstellbaren Teil der Zugdeichsel nur noch kleine, kompakt gestaltbare Übertragungselemente befinden.

Gemäß einem weiteren Merkmal der Erfindung ist die Hülle des Bowdenzuges am vorderen Ende mit der Zugstange und am hinteren Ende mit einem Festpunkt am Deichselrohr oder am Anhängerfahrzeugrahmen verbindbar und die Litze des Bowdenzuges mit ihrem vorderen Ende am höhenverstellbaren Teil der Zugdeichsel und mit ihrem hinteren Ende mit dem Umlenkhebel verbunden. Am höhenverstellbaren Teil der Zugdeichsel ist somit nur die Betätigungseinrichtung der Auflaufeinrichtung, ggf. mit einem Schwingungsdämpfer angeordnet. Die Kraftübertragung auf den zugleich eine Übersetzung bewirkenden Umlenkhebel erfolgt ausschließlich über den Bowdenzug.

Auf der Zeichnung ist ein Ausführungsbeispiel der erfindungsgemäßen Zugeinrichtung dargestellt, und zwar zeigen:
- Fig. 1: eine Seitenansicht einer höhenverstellbaren Zugeinrichtung,
- Fig. 2a: eine schematische Darstellung der Übertragungseinrichtung im Ausgangszustand und
- Fig. 2b: eine der Fig. 2a entsprechende Darstellung nach Betätigen der Auflaufbremseinrichtung.

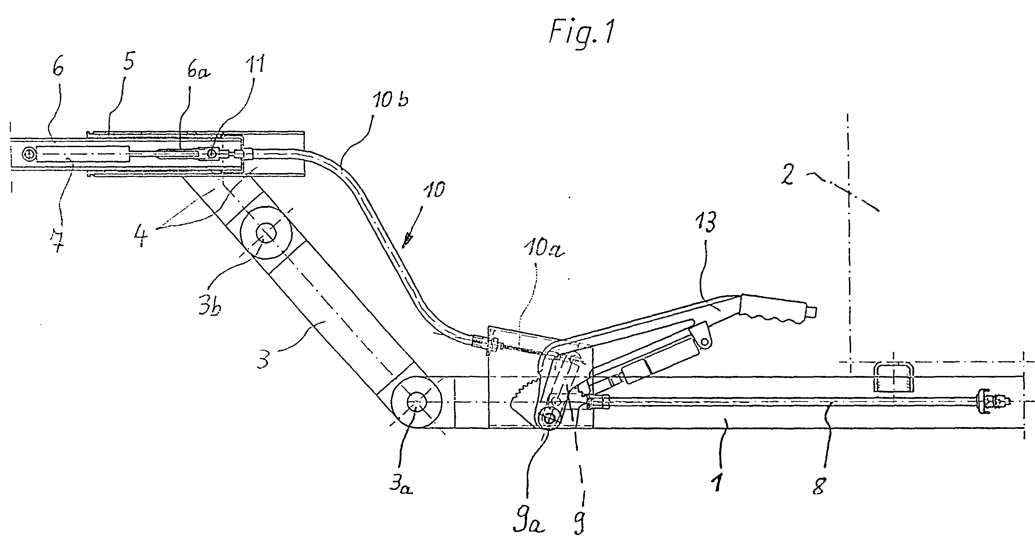

Die anhand eines Ausführungsbeispiels in Fig. 1 dargestellte Zugeinrichtung umfaßt eine Zugdeichsel 1, die mit dem Rahmen eines strichpunktiert angedeuteten Anhängerfahrzeugs 2 fest verbunden ist. Am vorderen Ende der Zugdeichsel 1 ist über ein Verbindungsteil 3 ein höhenverstellbares Teil 4 angeordnet. Die Höhenverstellung erfolgt in bekannter Weise durch Verschwenken des Verbindungsteiles 3 relativ zur Zugdeichsel 1 um die Schwenkachse 3a und - zur Erzielung der notwendigen Parallelität - des höhenverstellbaren Teiles 4 relativ zum Verbindungsteil 3 um die Schwenkachse 3b.

Am höhenverstellbaren Teil 4 der Zugdeichsel 1 ist eine Auflaufbremseinrichtung angeordnet, die ein Gehäuse 5 umfaßt, in dem eine Zugstange 6 längsbeweglich geführt ist. Diese Zugstange 6 ist an ihrem vorderen, auf der Zeichnung nicht dargestellten Ende mit einer Kupplung für ein Zugfahrzeug versehen.

Bei einem Abbremsen des Zugfahrzeuges wird aufgrund der Trägheit des Anhängerfahrzeuges 2 das mit dem höhenverstellbaren Teil 4 der Zugdeichsel 1 verbundene Gehäuse 5 der Auflaufbremseinrichtung relativ zur Zugstange 6 nach vorn verschoben. Diese Relativbewegung wird beim Ausführungsbeispiel durch einen in der Auflaufbremseinrichtung angeordneten Stoßdämpfer 7 gedämpft. Diese Relativbewegung zwischen der mit der Kupplung für ein Zugfahrzeug verbundenen Zugstange 6 und dem mit dem Anhängerfahrzeug 2 verbundenen höhenverstellbaren Teil 4 der Zugdeichsel 1 wird zur Betätigung eines Bremsgestänges 8 benutzt, das eine Zugkraft auf eine auf der Zeichnung nicht dargestellte Bremseinrichtung ausübt.

Zu diesem Zweck greift das vordere Ende des Bremsgestänges 8 an einem Umlenkhebel 9 an, der beim Ausführungsbeispiel mit seinem unteren Ende mittels eines Lagerbolzens 9a am Deichselrohr 1 verschwenkbar gelagert ist.

Am oberen Ende dieses Umlenkhebels 9 greift das hintere Ende der Litze 10a eines Bowdenzuges 10 an, dessen Hülle 10b an ihrem vorderen Ende mit der Zugstange 6 und an ihrem hinteren Ende mit einem Festpunkt am Deichselrohr 1 verbunden ist. Das vordere Ende der Litze 10a ist mittels eines Bolzens 11, der ein Langloch 6a in der Zugstange 6 durchdringt, am Gehäuse 5 der Auflaufbremseinrichtung sowie am höhenverstellbaren Teil 4 der Zugdeichsel 1 befestigt.

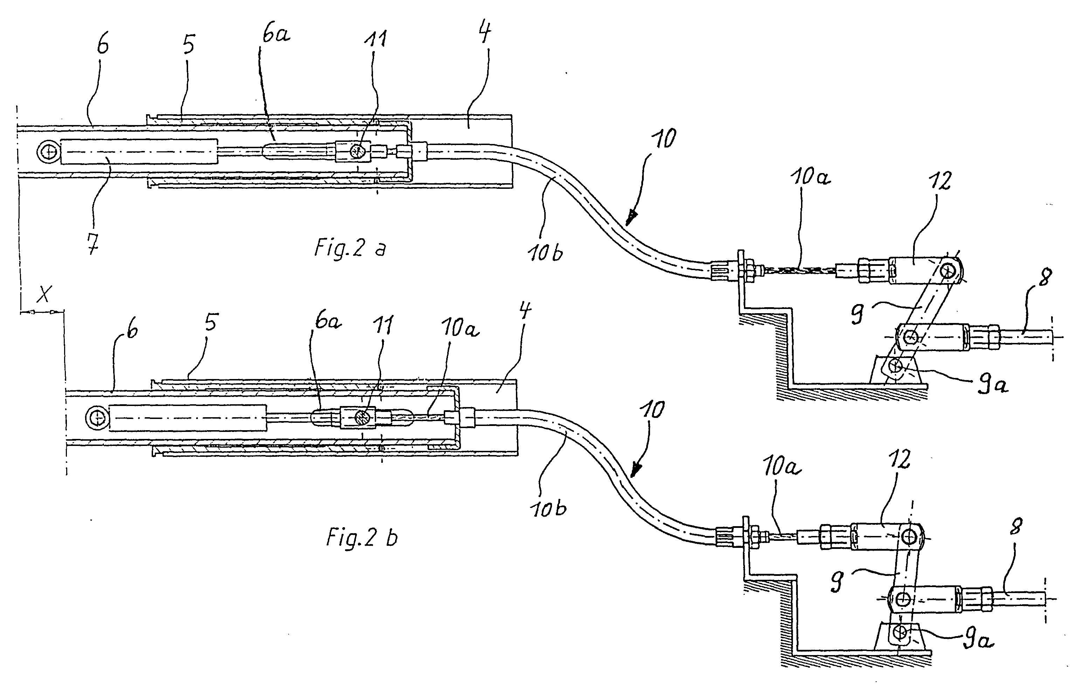

Aus den Fig. 2a und 2b geht die Wirkungsweise der voranstehend beschriebenen Einrichtung hervor, wobei Fig. 2a den Ausgangszustand zeigt. Die Zugstange 6 befindet sich in ihrer vorderen Endstellung innerhalb des Gehäuses 5 der Auflaufbremseinrichtung. Der im Gehäuse 5 und im höhenverstellbaren Teil 4 der Zugdeichsel 1 befestigte Bolzen 11 liegt im hinteren Ende des in der Zugstange 6 ausgebildeten Langloches 6a.

Wenn nunmehr das Anhängerfahrzeug 2 auf das gebremste Zugfahrzeug aufläuft, verschiebt sich die Zugstange 6 der Auflaufbremseinrichtung um den in den Fig. 2a und 2b eingezeichneten Weg X relativ zum Gehäuse 5, so daß sich die in Fig. 2b gezeichnete Situation ergibt. Da der im Gehäuse 5 befestigte Bolzen 11 bei dieser Relativbewegung einen Fixpunkt bildet, wird die Litze 10a relativ zur Hülle 10b des Bowdenzuges 10 nach links in Fig. 2 herausgezogen. Das hintere Ende der Litze 10a, das über eine Kupplung 12 mit dem oberen Ende des Umlenkhebels 9 verbunden ist, verschwenkt demgemäß beim dargestellten Ausführungsbeispiel diesen Umlenkhebel 9 entgegen dem Uhrzeigersinn, wie sich aus einem Vergleich der Fig. 2a und 2b ergibt. Auf diese Weise wird das zwischen der Kupplung 12 und dem Lagerbolzen 9a am Umlenkhebel 9 angreifende Bremsgestänge 8 ziehend betätigt, um die gewünschte Bremswirkung zu erzielen.

Die Fig. 1 läßt erkennen, daß der höhenverstellbare Teil 4 der Zugdeichsel 1 außer der Auflaufbremseinrichtung keine weiteren Teile der Kraftübertragung trägt, so daß sich weder eine Einschränkung der Bodenfreiheit bei abgesenktem Teil 4 ergibt, noch eine unerwünschte Gewichtsbelastung dieses höhenverstellbaren Teiles 4.

Die Fig. 1 zeigt schließlich, daß auf dem Lagerbolzen 9a des Umlenkhebels 9 weiterhin ein Handbremshebel 13 verschwenkbar gelagert ist, durch den die Fahrzeugbremse über eine Betätigung des Umlenkhebels 9 als Feststellbremse betätigbar ist.

### Bezugszeichenliste :

- 1: Zugdeichsel
- 2: Anhängerfahrzeug
- 3: Verbindungsteil
- 3a: Schwenkachse
- 3b: Schwenkachse
- 4: höhenverstellbares Teil
- 5: Gehäuse
- 6: Zugstange
- 6a: Langloch
- 7: Stoßdämpfer
- 8: Bremsgestänge
- 9: Umlenkhebel
- 9a: Lagerbolzen
- 10: Bowdenzug
- 10a: Litze
- 10b: Hülle
- 11: Bolzen
- 12: Kupplung
- 13: Handbremshebel
- X: Weg

## Patentansprüche

1. Höhenverstellbare Zugeinrichtung für Fahrzeuganhänger, mit einer fest mit einem Anhängerfahrzeugrahmen verbindbaren Zugdeichsel, von der ein Teil (4) gegenüber der übrigen Zugdeichsel (1) höhenverstellbar ist, mit einer in Fahrzeuglängsrichtung in dem höhenverstellbaren Teil (4) der Zugdeichsel geführten und mit einer Kupplung für ein Zugfahrzeug verbundenen Zugstange (6), und mit einer Auflaufbremseinrichtung, die bei einer Relativbewegung zwischen der Zugstange (6) und dem höhenverstellbaren Teil (4) der Zugdeichsel über einen Umlenkhebel auf ein Bremsgestänge wirkt,
**dadurch gekennzeichnet,**
daß der Umlenkhebel (9) an dem fest mit dem Anhängerfahrzeugrahmen verbindbaren Teil der Zugdeichsel (1) angeordnet und über einen Bowdenzug (10) mit der Zugstange (6) verbunden ist.

2. Zugeinrichtung nach Anspruch 1, dadurch gekennzeichnet, daß die Hülle (10b) des Bowdenzuges (10) am vorderen Ende mit der Zugstange (6) und am hinteren Ende mit einem Festpunkt an der Zugdeichsel (1) oder am Anhängerfahrzeugrahmen verbindbar ist und daß die Litze (10a) des Bowdenzuges (10) mit ihrem vorderen Ende am höhenverstellbaren Teil (4) der Zugdeichsel (1) und mit ihrem hinteren Ende mit dem Umlenkhebel (9) verbunden ist.

## Claims

1. Height-adjustable towing device for vehicle trailers, having a drawbar which can be connected fixedly to a trailer vehicle frame and of which one part (4) can be adjusted in height with respect to the remaining drawbar (1), having a tow-bar (6) which is guided in the longitudinal direction of the vehicle in the height-adjustable part (4) of the drawbar and is connected to a coupling for a towing vehicle, and having an overrunning braking device which acts via a deflecting lever on a brake linkage when there is a relative movement between the tow-bar (6) and the height-adjustable part (4) of the drawbar, characterized
in that the deflecting lever (9) is arranged on that part of the drawbar (1) which can be connected fixedly to the trailer vehicle frame, and is connected to the tow-bar (6) via a Bowden cable (10).

2. Towing device according to Claim 1, characterized
in that the sheath (10b) of the Bowden cable (10) can be connected at the front end to the tow-bar (6) and at the rear end to a fixed point on the drawbar (1) or on the trailer vehicle frame, and in that the strand (10a) of the Bowden cable (10) is connected by its front end to the height-adjustable part (4) of the drawbar (1) and by its rear end to the deflecting lever (9).

## Revendications

1. Dispositif de traction réglable en hauteur pour remorque de véhicule, comprenant un timon de traction susceptible d'être relié solidairement au châssis d'une remorque, dont une partie (4) est réglable en hauteur par rapport au reste du timon (1), et comprenant une tige de traction (6) guidée en direction longitudinale du véhicule dans la partie réglable en hauteur (4) du timon et reliée à un attelage pour un véhicule tracteur, et comprenant un dispositif de freinage à inertie, qui agit sur une tringlerie de freinage et par l'intermédiaire d'un levier de renvoi lors d'un déplacement relatif entre la tige de traction (6) et la partie réglable en hauteur (4) du timon,
caractérisé en ce que le levier de renvoi (9) est agencé sur la partie du timon (1) reliée solidairement au châssis de la remorque, et est relié à la tige de traction (6) par un câble Bowden (10).

2. Dispositif de traction selon la revendication 1, caractérisé en ce que la gaine (10b) du câble Bowden (10) est reliée à l'extrémité antérieure à la tige de traction (6) et à l'extrémité postérieure à un point fixe sur le timon (1) ou sur le châssis de la remorque, et en ce que le brin (10a) du câble Bowden (10) est relié à son extrémité antérieure à la partie réglable en hauteur (4) du timon (1) et à son extrémité postérieure au levier de renvoi (9).
